(19) Europäisches Patentamt
European Patent Office
Office européen des brevets

(11) **EP 4 148 610 A1**

(12) **EUROPÄISCHE PATENTANMELDUNG**

(43) Veröffentlichungstag:
**15.03.2023  Patentblatt 2023/11**

(51) Internationale Patentklassifikation (IPC):
***G06F 30/18*** *(2020.01)*

(21) Anmeldenummer: **21196505.8**

(52) Gemeinsame Patentklassifikation (CPC):
**G06F 30/18**

(22) Anmeldetag: **14.09.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Lohse, Oliver**
  **85614 Kirchseeon (DE)**
• **Robl, Peter**
  **94133 Röhrnbach (DE)**

(74) Vertreter: **Siemens Patent Attorneys**
**Postfach 22 16 34**
**80506 München (DE)**

(54) **ERMITTELN VON PFADEN ZUR VERDRAHTUNG VON ELEKTRISCHEN KOMPONENTEN**

(57)   Die Erfindung betrifft ein computerimplementiertes Verfahren zum Ermitteln von Pfaden (P1,...,Pn) zur Verdrahtung von mehreren elektrischen Komponenten (100,110,120), die in einem definierten Volumen (V) angeordnet sind. Um eine verbesserte Ermittlung von Pfaden (P1,...,Pn) zur Verdrahtung von mehreren elektrischen Komponenten (100,110,120) anzugeben werden die folgenden Schritte vorgeschlagen:
- Bereitstellen von Verdrahtungsdaten (RD), die für jeden der zu ermittelnden Pfade (P1,...,Pn) die über den jeweiligen Pfad (P1,...,Pn) zu verbindenden Komponenten (100,110,120) angeben,
- Ermitteln der Pfade (P1,...,Pn) für die elektrischen Komponenten (100,110,120) auf Basis der Verdrahtungsdaten (RD) mittels eines kürzester Pfad Algorithmus (RA), wobei der Algorithmus (RA) zum Ermitteln für jeden der Pfade (P1,...,Pn) zumindest folgende Nebenbedingungen (C1,C2) berücksichtigt:
- Minimierung (C1) von Diagonalen im Pfad (P1,...,Pn) und
- Minimierung (C2) der Anzahl von Richtungsänderungen im Pfad (P1,...,Pn) .

FIG 1

EP 4 148 610 A1

**Beschreibung**

Die Erfindung betrifft ein Verfahren zum Ermitteln von Pfaden zur Verdrahtung von mehreren elektrischen Komponenten in einem definierten Volumen.

Ein derartiges Verfahren kommt beispielsweise bei der Verdrahtung von Schaltschränken in der Industrie zum Einsatz.

Ein Stromlaufplan für einen handelsüblichen Schaltschrank umfasst ca. 320 Seiten und beinhaltet ca. 500 Drähte. Das manuelle Routing jedes einzelnen Drahtes in einer Electrical-Routing-Software (z. B. NX Electrical Routing) dauert im Mittel ca. 8 Minuten. Damit sind für das Routing 66 Stunden Konstruktionszeit erforderlich.

Der Erfindung liegt die Aufgabe zugrunde, eine verbesserte Ermittlung von Pfaden zur Verdrahtung von mehreren elektrischen Komponenten anzugeben.

Diese Aufgabe wird durch ein Verfahren mit den im Anspruch 1 angegebenen Merkmalen gelöst.

Das computerimplementierte Verfahren zum Ermitteln von Pfaden zur Verdrahtung von mehreren elektrischen Komponenten, die in einem definierten Volumen angeordnet sind, umfasst die Schritte:

- Bereitstellen von Verdrahtungsdaten, die für jeden der zu ermittelnden Pfade die über den jeweiligen Pfad zu verbindenden Komponenten angeben,
- Ermitteln der Pfade für die elektrischen Komponenten auf Basis der Verdrahtungsdaten mittels eines kürzester Pfad Algorithmus, wobei der Algorithmus zum Ermitteln für jeden der Pfade zumindest folgende Nebenbedingungen berücksichtigt:
- Minimierung von Diagonalen im Pfad und
- Minimierung der Anzahl von Richtungsänderungen im Pfad.

Die elektrischen Komponenten sind an festen Positionen im Volumen angeordnet und umfassen dabei jegliche Komponenten, die eine Verdrahtung erfordern oder eine Verdrahtung führen können. So können neben Schalt und Steuergeräten auch Kabelkanäle durch den Algorithmus berücksichtigt werden. Das Volumen ist begrenzt, kann aber Ein- und Auslässe für Verdrahtungen bzw. deren Pfade aufweisen. Das Volumen ist dreidimensional, auch die Komponenten sind in drei Dimensionen darin angeordnet.

Es hat sich gezeigt, dass unter Berücksichtigung der Nebenbedingungen, nämlich Diagonalen und die Anzahl der Richtungsänderungen zu minimieren, eine besonders vorteilhafte Pfadführung im Volumen entsteht. Der kürzeste Pfad Algorithmus kann dabei z. B. Dijkstra-Algorithmus oder ein A*-Algorithmus sein. Im Englischen werden diese als "shortest path algorithm" bezeichnet. Weiterhin ist es möglich eine Monte Carlo tree search als Algorithmus zu verwenden. Kürzeste Pfad Algorithmen basieren auf dem Problem der kürzesten Pfade für einen gegebenen Startknoten und berechnen einen kürzesten Pfad zwischen einem gegebenen Startknoten und einem Zielknoten. Der Startknoten ist dabei die elektrische Komponente, von der die Verdrahtung ausgehen soll. Der Zielknoten ist dementsprechend das elektrische Gerät/die Komponente, zu dem/der ein Pfad ermittelt werden soll. Die Wegpunkte bzw. die Knoten auf dem Weg dorthin weisen Abstände zueinander auf, die als Kantengewichte berücksichtigt werden können. Dementsprechend kann ein kürzester Pfad ermittelt werden.

In einer weiteren Ausführungsform ist der Algorithmus ein um eine Bestrafungsfunktion erweiterter kürzester Pfad Algorithmus. Die Nebenbedingungen werden dabei durch die Bestrafungsfunktion berücksichtigt. Es hat sich als vorteilhaft gezeigt die Nebenbedingungen mit einer separaten Bestrafungsfunktion zu berücksichtigen, was das Ergebnis der Pfade erheblich verbessert.

In einer weiteren Ausführungsform ist die Bestrafungsfunktion eine Erweiterung eines A*-Algorithmus in der Form:

$$f(x) = g(x) + h(x) + e(x)$$

e(x) ist dabei die Bestrafung von einem Startknoten x0 zu einem aktuellen Knoten x,

g(x) die Kosten von Startknoten x0 zum Knoten x und

h(x) die geschätzten Kosten vom Knoten x zum Ziel xn, in der Regel ist dies eine gerade Linie, oder eine sogenannte Luftlinie.

e(x) kann dabei verschiedene Bestrafungen aufsummieren, z. B.: Vermeidung von Diagonalen, der Füllgrad eines vorhandenen Abschnitts z.B. eines Kabelkanals und eine Potentialtrennung. Wird bspw. der Füllgrad überschritten oder nähert sich einer kritischen Grenze, so kann dafür entsprechend ebenfalls eine Bestrafung vorgesehen werden.

In einer weiteren Ausführungsform ist die Bestrafungsfunktion abhängig vom Verlauf des Pfades. Können bspw. zwei Knoten verbunden werden, ohne dass der Pfad seine Richtung wechseln muss, so gibt es keine Bestrafung. Verläuft der Pfad um 90 Grad abgewinkelt vom letzten Knoten, so kann eine erste Bestrafung, bspw. von zwei vergeben werden. Da Diagonalen im Schaltschrank bzw. bei der Verdrahtung zu vermeiden sind, ziehen diese eine größere zweite Bestrafung nach sich. Die zweite Bestrafung ist dabei größer als die erste Bestrafung und kann bspw. den Wert 6 aufweisen. Anhand des Wertes der Bestrafung kann die Reihenfolge der Wertigkeit der einzelnen Nebenbedingungen festgelegt werden.

In einer weiteren Ausführungsform weisen die Komponenten physikalische Anschlüsse auf. Die physikalischen Anschlüsse sind dabei diejenigen Anschlüsse, die mit den Drähten tatsächlich zu verdrahten sind. Die physikalischen Anschlüsse werden pro Komponente zu ein oder mehreren Ports pro Komponente zusammengefasst, wobei die Ports wiederum als Anschlussknoten für den Algorithmus dienen. Das Verwenden von Ports gegenüber den physikalischen Anschlüssen hat den Vorteil, dass pro elektrischer Komponente nur eine geringe Anzahl an Ports berücksichtigt werden muss und elektrische Komponenten oft eine große Vielzahl an physikalischen Anschlüssen aufweist. Zum Zwecke des automatischen Routings ist es ausreichend die Ports zu verwenden, da bspw. für die elektrischen Komponenten jeweils ein bezüglich der elektrischen Komponente bereitgestelltes Routing zur Verfügung gestellt werden kann, in dem festgelegt ist, wie die physikalischen Anschlüsse zu den Ports zu routen sind. Die Ports können zu diesem Zweck richtungsgebunden sein und einen Richtungsvektor aufweisen.

In einer weiteren Ausführungsform weisen die Komponenten physikalische Anschlüsse auf, die zu ein oder mehreren Ports zusammengefasst sind. Zum Ermitteln der Pfade werden dabei die Gesamtheit aller Ports und deren Abstände zueinander als Knoten bzw. Gitternetz betrachtet. So können als Wegpunkte für die Pfade jeweils die Ports verwendet werden, was sehr vorteilhaft hinsichtlich der Erzeugung eines Gitternetzes für den Algorithmus ist, da dieser bereits aus der Anordnung der Komponenten abgeleitet werden kann.

In einer weiteren Ausführungsform werden die Koordinaten der Ports bzw. der Knoten auf Basis eines 3D-CAD-Modells des Volumens und der darin angeordneten Komponentenmodelle der elektrischen Komponenten ermittelt. Das 3D-CAD-Modell des Volumens als z. B. eines Schaltschranks wird in der Regel bei der Konstruktion des Schaltschranks sowieso erstellt. So kann als Basis für den Algorithmus direkt im CAD-Programm das elektrische Routing durchgeführt werden, indem die Koordinaten der Knoten direkt aus der Anordnung der Komponentenmodelle im Volumen ermittelt werden.

In einer weiteren Ausführungsform werden als weitere Nebenbedingungen ein maximaler Biegeradius für den jeweiligen Pfad und/oder eine Potentialtrennung beim Ermitteln der Pfade berücksichtigt.

In einer weiteren Ausführungsform wird beim Ermitteln der Pfade eine Kollisionsprüfung des Pfades mit Komponentenmodellen der elektrischen Komponenten durchgeführt. Die Komponentenmodelle weisen dabei eine Modellierung der Gehäuse auf, die natürlich nicht mit den Pfaden der Verdrahtung kollidieren dürfen. Wenn Komponenten eine Verdrahtungsführung vorgesehen haben, so können diese entsprechend modelliert werden und an diesen Stellen eine Kollision toleriert bzw. durch den entsprechenden Kabeltunnel ignoriert werden.

In einer weiteren Ausführungsform werden beim Ermitteln der Pfade nur diejenigen Knoten berücksichtigt, die zumindest einen Koordinatenwert in der richtigen Ebene bzw. in der richtigen Koordinate aufweisen.

In anderen Worten werden nur diejenigen Knoten berücksichtigt, die zumindest einen Koordinatenwert aufweisen, der mit einem Koordinatenwert des folgenden Knoten übereinstimmt. So können diejenigen Knoten ignorierte werden, die unter Heranziehung dieser Logik nicht in Frage kommen. Diese Systematik kann für die Ermittlung jeder Verbindung eingesetzt werden, kann aber auch nur in bestimmten Fällen zum Einsatz kommen.

Die Aufgabe wird weiterhin durch ein Verfahren zum Erzeugen eines 3D-CAD-Modells gelöst, das eine Verdrahtung von mehreren elektrischen Komponenten aufweist. Das Verfahren umfasst dabei die Schritte:

- Ermitteln von Pfaden für die elektrischen Komponenten nach dem erfindungsgemäßen Verfahren,
- Ermitteln von Splines für jeden der Pfade,
- Erstellen einer Verdrahtung bzw. einer Modellierung des Pfades auf Basis des Splines,
- Vergrößern des Querschnitts zumindest eines Abschnitts eines bestehenden Splines, wenn mehrere Pfade im Abschnitt verlaufen.

Auf diese Weise entsteht ein 3D-CAD-Modell, das eine realistische Darstellung der Verdrahtung aufweist. Ebenso möglich ist, dass wenn die Querschnittsvergrößerung einen gewissen Wert überschreitet oder eine Kollision auftritt, dass eine Pfadplanung an dieser Stelle dementsprechend neu durchgeführt werden muss. Weiterhin kann durch die realistische Darstellung der Drahtstärken bzw. der Verdrahtungsstärken ein besseres Abbild der Verdrahtung direkt im 3D-CAD-Modell erstellt werden.

Die Aufgabe wird weiterhin durch ein Verfahren zum Vorkonfektionieren von Kabeln und/oder eines Kabelstrangs gelöst. Das Verfahren zum Vorkonfektionieren der Kabel/des Kabelstrangs basiert dabei auf den Pfaden, die mittels eines erfindungsgemäßen Verfahrens ermittelt wurden. Das Verfahren umfasst dabei die Schritte:

- Ermitteln eines Strangs, der zumindest in einem Abschnitt mehrere Pfade aufweist,
- Bestimmen der Länge der Pfade, die durch den Schnitt verlaufen,
- Konfektionieren einzelner Kabel des Kabelstrangs anhand der bestimmten Mengen.

Die einzelnen Kabel können dann in dem Abschnitt, in dem sich die mehreren Pfade zusammenfinden bzw. überlappen, durch ein Kabelmanagementsystem miteinander verbunden werden. Dies können bspw. Kabelbinder sein.

Entsprechende Crimpvollautomaten können für die ermittelten Pfade einen Datensatz erhalten und vollautomatisiert die Kabel konfektionieren.

Im Folgenden wird die Erfindung anhand der in den Figuren dargestellten Ausführungsbeispiele näher beschrieben und erläutert. Es zeigen schematisch:

FIG 1 ein Volumen mit darin angeordneten elektrischen Komponenten,

FIG 2 ein Modell des Volumens aus FIG 1 mit einem Algorithmus,

FIG 3 ein 3D-CAD-Modell einer elektrischen Komponente mit ihren physikalischen Anschlüssen,

FIG 4 einen Schaltschrank als Volumen V

FIG 5 einen Graphen aus Knoten, die jeweils einer elektrischen Komponente zugeordnet sind und

FIG 6 eine visuelle Darstellung einer Bestrafungsfunktion.

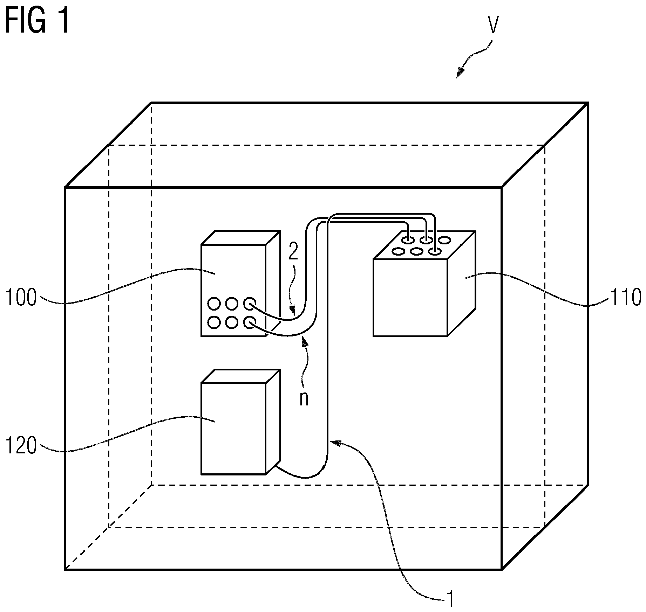

Figur 1 zeigt schematisch ein Volumen V, z. B. einen Schaltkasten oder einen Schaltschrank, mit darin angeordneten elektrischen Komponenten 100, 110, 120. Die elektrischen Komponenten sind dabei mit Verdrahtungen 1, 2, n miteinander verbunden. In diesem einfachen Beispiel wäre es ein Leichtes die Verdrahtung manuell durchzuführen, in der Realität sind derartige Schaltkästen deutlich komplexer und die Verdrahtungen dementsprechend vielfältiger und auch in der Anzahl deutlich höher.

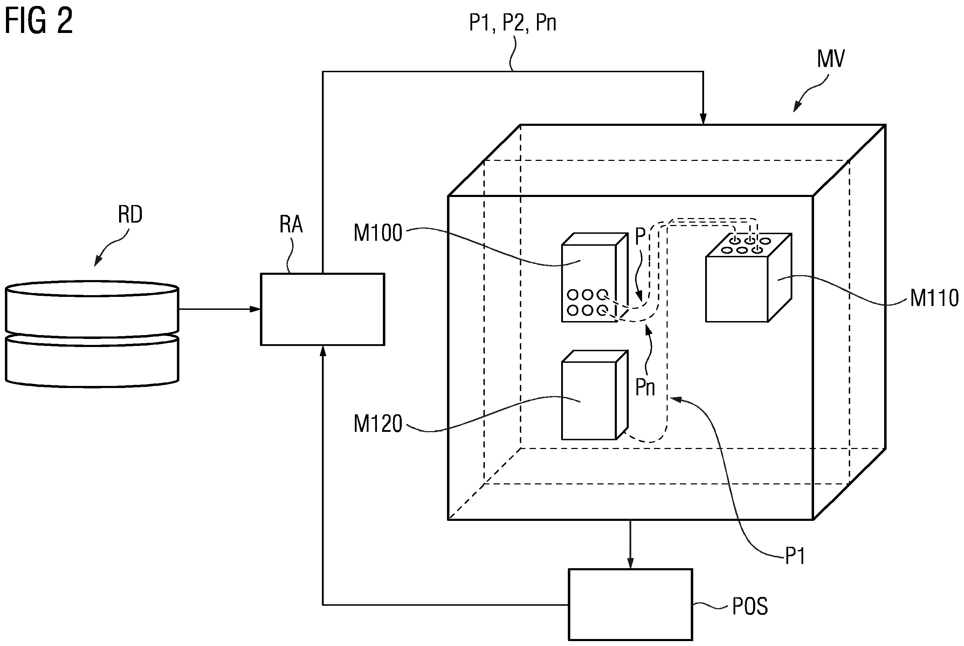

Figur 2 zeigt ein Modell MV des in Figur 1 gezeigten Volumens V. Das Modell ist dabei vorzugsweise ein 3D-CAD-Modell, wie es in üblichen 3D-CAD-Programmen erstellt werden kann. Im Modell des Volumens MV sind dabei Modelle der elektrischen Komponenten M100, M110, M120 angeordnet. Gestrichelt dargestellt sind Pfade P1, P2, Pn, die für die Komponentenmodelle M110, M120 erstellt werden sollen. Eine Positionsermittlung POS kann dabei die Positionen der Komponentenmodelle M110, M120 ableiten und an einen kürzester Pfad Algorithmus RA zur Verfügung stellen. Weiterhin stellt eine Datenbank Verdrahtungsdaten RD an dem kürzesten Pfad Algorithmus RA zur Verfügung, die Verdrahtungsdaten RD zeigen dabei prinzipiell welche Komponenten mit welchen Komponenten zu verbinden sind. Der Algorithmus RA liefert als Ausgangsgröße die Pfade P1, P2, Pn, die dann direkt im Volumenmodell MV berücksichtigt werden können. Die Pfade können bspw. als Splines realisiert werden.

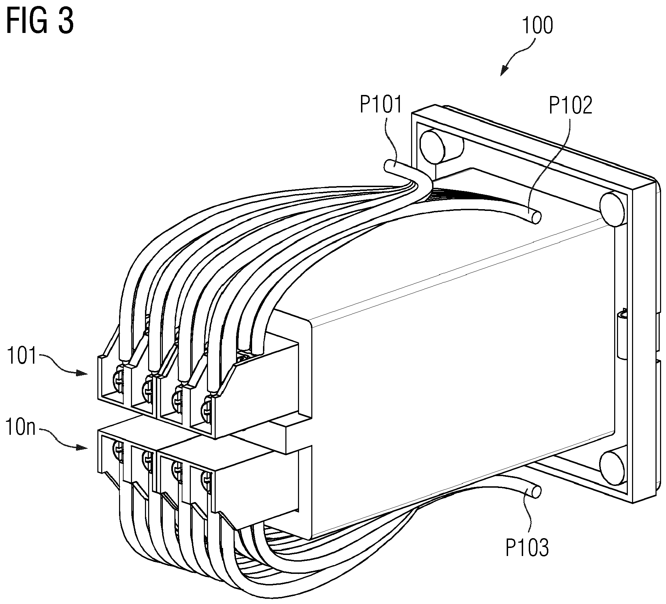

Figur 3 zeigt ein 3D-CAD-Modell eines realistischen elektrischen Gerätes bzw. einer realistischen elektrischen Komponente 100, die eine Vielzahl an physikalischer Anschlüsse 101, ... 10n aufweist. Die elektrische Komponente 100 weist weiterhin drei Ports P101, P102, P103 auf, die die physikalischen Anschlüsse 101, 10n jeweils richtungsgebunden und als Anschlusspunkt aus der elektrischen Komponente 100 herausführen. Derartige Komponentenmodelle müssen nur einmalig für jede elektrische Komponente angelegt werden und können beliebig oft wiederverwendet werden. Es ist denkbar, dass der Komponentenhersteller derartige Komponentenmodelle bereitstellt.

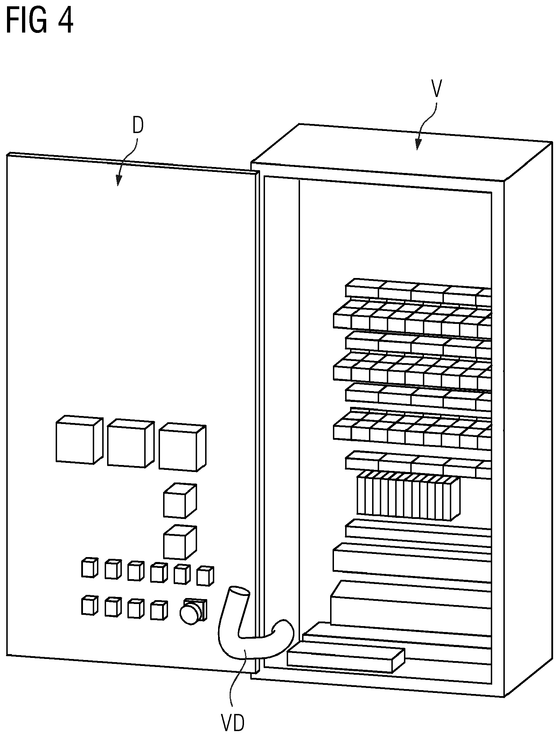

Figur 4 zeigt einen Schaltschrank, mit unverdrahteten elektrischen Komponenten. Der Schaltschrank weist ein Volumen V und eine Volumenabdeckung D, die hier als Tür ausgebildet ist, auf. Als Verbindung für Verdrahtungen zwischen dem Volumen V und der Tür D ist ein Kabelkanal VD vorgesehen. Das vorliegende Verfahren ist besonders für die freie Verdrahtung auf der Tür D geeignet und eignet sich weiterhin auch für die Verdrahtung der kabelkanalgebundenen Verdrahtung innerhalb des Volumens V bzw. der hutschienengebundenen Verdrahtung. Das Verfahren kann dabei auch angewendet werden, um das Volumen V und die Tür D zu verdrahten.

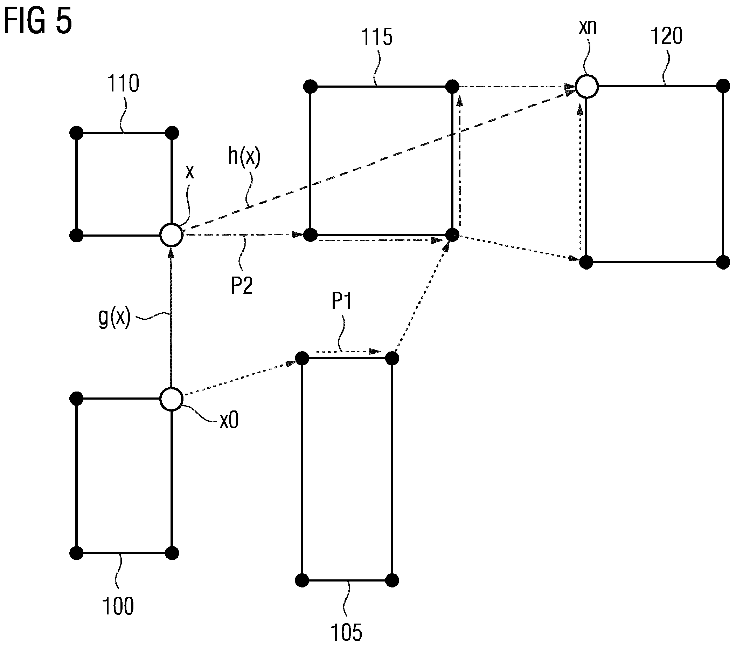

Figur 5 zeigt einen Graphen aus Knoten x, x0, xn, die jeweils einer elektrischen Komponente 100,...,120 zugeordnet sind. Im vorliegenden Fall sind fünf elektrische Komponenten 100, 105, 110, 115, 120 vorhanden, die jeweils vier Knoten x aufweisen. Gezeigt ist der Übersichtlichkeit wegen einer zweidimensionalen Ansicht, das Verfahren ist aber ebenso auf dreidimensionale Graphen und Netzwerke anwendbar. Ein Startknoten x0 soll über einen Pfad P1, P2 mit einem Zielknoten xn verbunden werden.

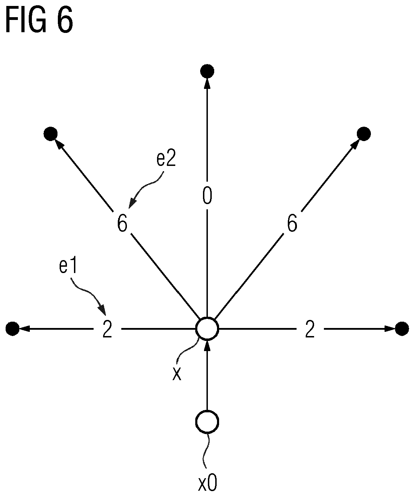

Der Knoten x ist der Ausgangspunkt für den aktuellen Schritt, den der Algorithmus soeben abarbeitet. Es ist ein erster Pfad P1 und ein zweiter Pfad P2 eingezeichnet. Der erste Pfad P1 basiert auf dem kürzest möglichen Abstand zwischen zwei Knoten, bspw. dem euklidischen Abstand. Hier ist zu sehen, dass bereits der erste Pfeil des Pfades P1 ausgehend von x0 eine Diagonale darstellt, die es zu vermeiden gilt, auch wenn der Abstand zu einem anderen Knoten größer ist. Weiterhin eingezeichnet ist g(x), was die bisher angesammelten Kosten vom Start x0 zum Knoten x darstellt. Dies ist in diesem Fall nur eine einzige Verbindung, die in diesem Fall neben ihrer Länge keine weiteren Bestrafungen mit sich zieht. Ausgehend vom aktuellen Knoten x ist eine Schätzfunktion h(x) zu sehen, die die Kosten vom Knoten x zum Ziel xn schätzt. Auf Basis dieser Schätzung kann der A*-Algorithmus abschätzen, ob dieser Knoten ein geeigneter Knoten ist oder nicht. Im vorliegenden Fall ist der aktuelle Knoten x geeignet und der zweite Pfad P2 wird weiteriteriert. Eine Abknickung nach rechts um 90 Grad zieht nur eine geringe Bestrafung nach sich. Dazu mehr in der folgenden Figur 6.

Die Schätzfunktion h(x) illustriert, dass zwischen dem aktuellen Knoten x und dem Zielknoten xn eine Diagonale bestünde, die aber wiederum mit der elektrischen Komponente 115 kollidieren würde. Somit ist diese nicht nur als Diagonale ungeeignet, sondern ist auch aus Kollisionsgründen mit dem Gehäuse der elektrischen Komponente 115 ungeeignet. Diese Kollision kann über eine Kollisionsprüfung abgefangen werden.

Insgesamt kann der Algorithmus die folgende Form aufweisen:

$$f(x) = g(x) + h(x) + e(x)$$

Der zweite Pfad P2 bewegt sich nun so über die weiteren Knoten unter Verwendung von 90 Grad-Abknickungen weiter zum Ziel xn. Dieser Pfad ist nun fertig und abgespeichert werden und bspw. mittels eines Splines als realistische Verdrahtung hinterlegt werden.

Figur 6 zeigt eine visuelle Darstellung einer Bestrafungsfunktion e (x). Ausgehend von einem Startknoten x0 wurde bereits ein erstes Pfadsegment zu einem aktuellen Knoten x gefunden. Ausgehend vom aktuellen Knoten x gibt es nun die Möglichkeit 90 Grad nach links, 90 Grad nach rechts, 45 Grad nach links, 45 Grad nach rechts oder geradeaus weiter zu verfahren. Gemäß der Bestrafungsfunktion e (x) wird eine rechtwinklige Abknickung mit einer Bestrafung von zwei versehen. Diese erste Bestrafung ist dabei kleiner gewählt als eine zweite Bestrafung, z. B. von sechs für die 45 Grad-Diagonale, die es zu vermeiden gilt. Durch das Vorsehen von ersten, zweiten und weiteren Bestrafungen kann der kürzeste Pfad Algorithmus RA die Nebenbedingungen effizient berücksichtigen und die Pfade erfüllen die Bedingungen dementsprechend.

Obwohl die in Figur 5 und Figur 6 dargestellten Knotensysteme jeweils nur im zweidimensionalen Raum dargestellt sind, ist der Algorithmus aber auch direkt im 3D-CAD-Tool in dreidimensionalen Modellen anwendbar.

Zusammenfassend betrifft die Erfindung ein computerimplementiertes Verfahren zum Ermitteln von Pfaden (P1,...,Pn) zur Verdrahtung von mehreren elektrischen Komponenten (100,110,120), die in einem definierten Volumen (V) angeordnet sind. Um eine verbesserte Ermittlung von Pfaden (P1,...,Pn) zur Verdrahtung von mehreren elektrischen Komponenten (100,110,120) anzugeben werden die folgenden Schritte vorgeschlagen:

- Bereitstellen von Verdrahtungsdaten (RD), die für jeden der zu ermittelnden Pfade (P1,...,Pn) die über den jeweiligen Pfad (P1,...,Pn) zu verbindenden Komponenten (100,110,120) angeben,
- Ermitteln der Pfade (P1,...,Pn) für die elektrischen Komponenten (100,110,120) auf Basis der Verdrahtungsdaten (RD) mittels eines kürzester Pfad Algorithmus (RA), wobei der Algorithmus (RA) zum Ermitteln für jeden der Pfade (P1,...,Pn) zumindest folgende Nebenbedingungen (C1,C2) berücksichtigt:
- Minimierung (C1) von Diagonalen im Pfad (P1,...,Pn) und
- Minimierung (C2) der Anzahl von Richtungsänderungen im Pfad (P1,...,Pn).

Bezugszeichen

| 100,...,120 | elektrische Komponenten |
| 1,...,n | Verdrahtung |
| V | Volumen |
| D | Tür des Volumens |

| 101,...,10n | Anschlüsse der Komponente |
| P1,...,Pn | Pfade zur Verdrahtung |
| MV | Modell des Volumens |
| M100,M110,M120 | Modell der elektrischen Komponente |
| POS | Positionsermittlung |
| RA | kürzester Pfad Algorithmus |
| C1,C2,C3 | Nebenbedingung des Algorithmus |
| RD | Verdrahtungsdaten |
| x | aktueller Knoten |
| x0 | Startknoten |
| xn | Zielknoten |
| e(x) | Bestrafungsfunktion |
| e1,e2 | Bestrafungen |
| g(x) | Kosten von Start x0 zum Knoten x |
| h(x) | geschätzte Kosten vom Knoten x zum Ziel xn |

**Patentansprüche**

1. Computerimplementiertes Verfahren zum Ermitteln von Pfaden (P1,...,Pn) zur Verdrahtung von mehreren elektrischen Komponenten (100,110,120), die in einem definierten Volumen (V) angeordnet sind, umfassend die Schritte:

   - Bereitstellen von Verdrahtungsdaten (RD), die für jeden der zu ermittelnden Pfade (P1,...,Pn) die über den jeweiligen Pfad (P1,...,Pn) zu verbindenden Komponenten (100,110,120) angeben,
   - Ermitteln der Pfade (P1,...,Pn) für die elektrischen Komponenten (100,110,120) auf Basis der Verdrahtungsdaten (RD) mittels eines kürzester Pfad Algorithmus (RA), wobei der Algorithmus (RA) zum Ermitteln für jeden der Pfade (P1,...,Pn) zumindest folgende Nebenbedingungen (C1,C2) berücksichtigt:
   - Minimierung (C1) von Diagonalen im Pfad (P1,...,Pn) und
   - Minimierung (C2) der Anzahl von Richtungsänderungen im Pfad (P1,...,Pn).

2. Verfahren nach Anspruch 1, wobei der Algorithmus (RA) ein um eine Bestrafungsfunktion (e(x)) erweiterter kürzester Pfad Algorithmus (RA) ist, wobei die Nebenbedingungen (C1, C2) durch die Bestrafungsfunktion (e(x)) berücksichtigt werden.

3. Verfahren nach Anspruch 2, wobei die Bestrafungsfunktion (e(x)) eine Erweiterung eines A*-Algorithmus in folgender Form ist:

$$f(x) = g(x) + h(x) + e(x).$$

**4.** Verfahren nach Anspruch 2 oder 3, wobei die Bestrafungsfunktion (e(x)) abhängig vom Verlauf des Pfades (P1,...,Pn) bestimmt wird.

**5.** Verfahren nach einem der vorhergehenden Ansprüche, wobei die Komponenten (100,110,120) physikalische Anschlüsse (101,...,10n) aufweisen, wobei die physikalischen Anschlüsse (101,...,10n) zu ein oder mehreren Ports (P101,P102,P103) pro Komponente (100,110,120) zusammengefasst sind, wobei die Ports (P101,P102,P103) als Knoten (x) für den Algorithmus (RA) dienen.

**6.** Verfahren nach einem der vorhergehenden Ansprüche, wobei die Komponenten (100,110,120) physikalische Anschlüsse (101,...,10n) aufweisen, wobei die physikalischen Anschlüsse (101,...,10n) zu ein oder mehreren Ports (P101,P102,P103) pro Komponente (100,110,120) zusammengefasst sind, wobei zum Ermitteln der Pfade (P1,...,Pn) die Gesamtheit aller Ports (P101,P102,P103) aller im Volumen (V) angeordneten Komponenten (100,110,120) als Gitternetz für den Algorithmus (RA) dient.

**7.** Verfahren nach einem der Ansprüche 5 oder 6, ferner umfassend den Schritt:

- Ermitteln von Koordinaten der Ports (P101,P102,P103) auf Basis eines 3D-CAD-Modells (MV) des Volumens (V) und darin angeordneter Komponenten-Modelle (M100,M110,M120) der elektrischen Komponenten (100,110,120).

**8.** Verfahren nach einem der vorhergehenden Ansprüche, wobei ferner folgende weiteren Nebenbedingungen (C3) beim Ermitteln der Pfade (P1,...,Pn) berücksichtigt werden:

- ein maximaler Biegeradius für den jeweiligen Pfad (P1,...,Pn) und/oder
- eine Potentialtrennung.

**9.** Verfahren nach einem der vorhergehenden Ansprüche, wobei beim Ermitteln der Pfade (P1,...,Pn) eine Kollisionsprüfung des Pfades (P1,...,Pn) mit Komponenten-Modellen (M100,M110,M120) der elektrischen Komponenten (100,110,120) durchgeführt wird.

**10.** Verfahren nach einem der vorhergehenden Ansprüche, wobei beim Ermitteln der Pfade (P1,...,Pn) nur diejenigen Knoten (x) berücksichtigt werden, die zumindest einen Koordinatenwert aufweisen, der mit einem Koordinatenwert des folgenden Knoten (x+1) übereinstimmt.

**11.** Verfahren zum Erzeugen eines 3D-CAD-Modells mit einer Verdrahtung von mehreren elektrischen Komponenten (100,110,120), umfassend die Schritte:

- Ermitteln von Pfaden (P1,...,Pn) nach einem Verfahren nach einem der vorhergehenden Ansprüche,
- Ermitteln eines Splines für jeden der Pfade (P1,...,Pn),
- Erstellen einer Verdrahtung pro Pfad (P1,...,Pn) auf Basis des Splines,
- Vergrößern des Querschnitts zumindest eines Abschnitts einer bestehenden Verdrahtung, wenn mehrere Pfade (P1,...,Pn) im Abschnitt verlaufen.

**12.** Verfahren zum Vorkonfektionieren von Kabeln und/oder eines Kabelstrangs auf Basis von Pfaden (P1,...,Pn), die mittels eines Verfahrens nach einem der vorhergehenden Ansprüche ermittelt wurden,

- Ermitteln eines Strangs, der zumindest in einem Abschnitt mehrere Pfade (P1,...,Pn) aufweist,
- Bestimmen der Länge der Pfade (P1,...,Pn), die durch den Abschnitt laufen,
- Konfektionieren einzelner Kabel des Kabelstrangs anhand der bestimmten Längen.

**13.** Softwareprogrammprodukt, das zur Durchführung eines Verfahrens nach einem der Ansprüche 1 bis 11 ausgebildet ist, insbesondere ein 3D-CAD-System.

FIG 1

FIG 2

FIG 3

## FIG 4

FIG 5

FIG 6

Europäisches
Patentamt

European
Patent Office

Office européen
des brevets

## EUROPÄISCHER RECHERCHENBERICHT

Nummer der Anmeldung

EP 21 19 6505

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 8 706 452 B2 (MILLER JUSTIN H [US]; SIEMENS PRODUCT LIFECYCLE MAN SOFTWARE INC [US]) 22. April 2014 (2014-04-22)<br>* Spalte 1, Zeile 26 – Zeile 28 *<br>* Spalte 3, Zeile 28 – Zeile 35 *<br>* Spalte 3, Zeile 51 – Zeile 59 *<br>* Spalte 5, Zeile 17 – Zeile 38 *<br>* Spalte 8, Zeile 56 – Zeile 59 *<br>* Spalte 10, Zeile 15 – Zeile 18 *<br>* Spalte 12, Zeile 3 – Spalte 13, Zeile 9 *<br>* Abbildung 2 *<br>_____ | 1-13 | INV.<br>G06F30/18 |
| A | ALSAKKA FATIMA ET AL: "Comparison of Shortest Path Finding Algorithms for Cable Networks on Industrial Construction Projects",<br>35TH INTERNATIONAL SYMPOSIUM ON AUTOMATION AND ROBOTICS IN CONSTRUCTION (ISARC 2018), 14. Oktober 2020 (2020-10-14), Seiten 1-8, XP055892978,<br>ISSN: 2413-5844, DOI: 10.22260/ISARC2020/0058<br>Gefunden im Internet:<br>URL:https://www.iaarc.org/publications/fulltext/ISARC_2020_Paper_152.pdf<br>[gefunden am 2022-02-17]<br>* Seite 410, rechte Spalte, Zeile 22 – Seite 411, linke Spalte, Zeile 5 *<br>* Seite 412, linke Spalte, Zeile 11 – Seite 413, linke Spalte, Zeile 17 *<br>* Abbildung 2 *<br>_____<br>-/-- | 1-13 | RECHERCHIERTE SACHGEBIETE (IPC)<br><br>G06F |

**1** Der vorliegende Recherchenbericht wurde für alle Patentansprüche erstellt

| Recherchenort | Abschlußdatum der Recherche | Prüfer |
|---|---|---|
| **München** | **1. März 2022** | **Eigner, Robert** |

Seite 1 von 2

Europäisches
Patentamt

European
Patent Office

Office européen
des brevets

## EUROPÄISCHER RECHERCHENBERICHT

Nummer der Anmeldung

**EP 21 19 6505**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | **Winter Stephan ET AL: "Modeling Costs of Turns in Route Planning",** <br> **,** <br> **6. August 2001 (2001-08-06), Seiten 1-23, XP055893007,** <br> **Gefunden im Internet:** <br> **URL:https://citeseerx.ist.psu.edu/viewdoc/ download?doi=10.1.1.24.8035&rep=rep1&type= pdf** <br> **[gefunden am 2022-02-17]** <br> **\* Seite 6, Zeile 6 – Zeile 12 \*** <br> ----- | 1-13 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| **München** | **1. März 2022** | **Eigner, Robert** |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
Dokument

EPO FORM 1503 03.82 (P04C03)

**Seite 2 von 2**

**ANHANG ZUM EUROPÄISCHEN RECHERCHENBERICHT
ÜBER DIE EUROPÄISCHE PATENTANMELDUNG NR.**

EP 21 19 6505

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2022

| Im Recherchenbericht angeführtes Patentdokument | Datum der Veröffentlichung | Mitglied(er) der Patentfamilie | Datum der Veröffentlichung |
|---|---|---|---|
| US 8706452 B2 | 22-04-2014 | CN 102132277 A | 20-07-2011 |
| | | EP 2294522 A1 | 16-03-2011 |
| | | JP 5269196 B2 | 21-08-2013 |
| | | JP 2011526389 A | 06-10-2011 |
| | | US 2009326876 A1 | 31-12-2009 |
| | | WO 2009158466 A1 | 30-12-2009 |

Für nähere Einzelheiten zu diesem Anhang : siehe Amtsblatt des Europäischen Patentamts, Nr.12/82

EPO FORM P0461